# EUROPÄISCHE PATENTSCHRIFT

(11) **EP 1 422 252 B1**
(45) Veröffentlichungstag und Bekanntmachung des Hinweises auf die Patenterteilung: **09.04.2008**
(21) Anmeldenummer: 03025074.0
(22) Anmeldetag: 03.11.2003
(51) Int. Cl.: C08F 210/02, C08J 3/03, A23B 7/16

(54) **Wässrige Dispersionen enthaltend Ethylenterpolymerwachse, Verfahren zu ihrer Herstellung und ihre Verwendung**
Aqueous Dispercion Containing Ethylene Terpolymer Waxes, Process for their Preparation and their Use
Dispersions aqueuses contenant des cires de terpolymères d'éthylène, procédé de fabrication et utilisation

(30) Priorität: 20.11.2002 DE 10254280
(43) Veröffentlichungstag der Anmeldung: 26.05.2004
(73) Patentinhaber: BASF SE, 67056 Ludwigshafen (DE)
(72) Erfinder: Fechtenkötter, Andreas Dr., 67063 Ludwigshafen (DE); Zeitz, Katrin Dr., 68239 Mannheim (DE); Ehle, Michael Dr., 67071 Ludwigshafen (DE); Deckers, Andreas Dr., 55234 Flomborn (DE); Kasel, Wolfgang Dr., 69226 Nussloch (DE)

(56) Entgegenhaltungen:
- EP-A- 0 187 250
- EP-A- 1 127 901
- WO-A-98/20056
- US-A- 4 644 044
- US-A- 5 700 890
- PATENT ABSTRACTS OF JAPAN Bd. 0103, Nr. 10 (C-379), 22. Oktober 1986 (1986-10-22) & JP 61 123612 A (MITSUBISHI PETROCHEM CO LTD), 11. Juni 1986 (1986-06-11)

## Beschreibung

Die vorliegende Erfindung betrifft wässrige Dispersionen enthaltend Ethylenterpolymerwachse, enthaltend
40 bis 95 Gew.-% Einheiten, abgeleitet von Ethylen,
0,1 bis 40 Gew.-% Einheiten, abgeleitet von mindestens einem Anhydrid einer C₄-C₁₀-Dicarbonsäure mit mindestens einer ethylenischen C-C-Doppelbindung,
sowie 1 bis 40 Gew.-% Einheiten, abgeleitet von mindestens einem Ester der allgemeinen Formel 1 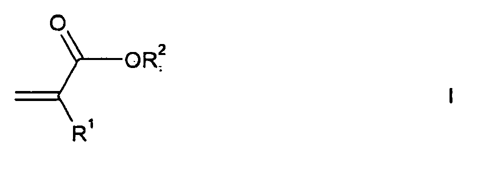 wobei R¹ gewählt wird aus Wasserstoff, C₁-C₁₀-Alkyl, C₃-C₁₂-Cydoalkyl oder C₆-C₁₄-Aryl und R² gewählt wird aus C₁-C₁₀-Alkyl oder C₃-C₁₂-Cycloalkyl,
mit einem Molekulargewicht M_{w} von bis zu 20.000 g/mol.

An Bodenpflegemittel, beispielsweise Bohnerwachse, werden in der Regel hohe Anforderungen gestellt. Neben einem günstigen Preis sollen sie eine gute Lagerstabilität aufweisen, außerdem sollen sie sich leicht applizieren lassen. Die Böden sollen einen schönen Glanz aufweisen und möglichst lange sicher begehbar sein. In der Regel versucht man, diese Eigenschaften durch das eingesetzte emulgierbare Ethylenpolymerisat einzustellen, das als Komponente im Bodenpflegemittel eingesetzt wird.

Bei den technisch bekannten emulgierbaren Ethylenpolymerisaten handelt es sich um sauerstoffhaltige Ethylenpolymerisate, bei denen der Sauerstoff auf verschiedene Arten eingeführt werden kann. Ein bekanntes Zweistufenverfahren besteht aus der Herstellung von sauerstofffreien Polyethylenwachsen durch radikalische oder Ziegler-Natta-Polymerisation von Ethylen, gefolgt von der Oxidation der erhaltenen Polyethylenwachse durch Luft oder Peroxide oder reinem Sauerstoff oder Gemischen derselben lassen sich sogenannte Oxidat-Wachse erhalten. Dieses letztgenannte Verfahren weist jedoch technische Nachteile auf.

Durch die Oxidation eines Polyethylens wird das Molekulargewicht der zugrundeliegenden Polyethylenketten verringert, was nachteilig für die Härte des Produktes ist. Außerdem ist die Herstellung von Oxidat-Wachsen stets ein Zweistufen-Prozess, was zu zusätzlichem Investitionsbedarf führt (vgl. beispielsweise: Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996).

Aus US 4,644,044 sind Terpolymere aus 50 bis 99,2 Gew.-% Ethylen, 0,3 bis 10 Gew.-% Maleinsäureanhydrid und 0,5 bis 40 Gew.-% Alkyl(meth)acrylat bekannt. Sie haben einen Schmelzindex von 0,1 bis 500 dg/min und werden durch Terpolymerisation erhalten, wobei in der Reaktionsapparatur mindestens ein Vorverdichter und ein Sekundärkompressor vorhanden sein müssen. Die offenbarten Terpolymere haben kautschukartige Eingenschaften, und der Umsatz ist im offenbarten Beispiel 1 mit 10% unvorteilhaft niedrig.

Aus EP-A 0 437 786 sind säureanhydridgruppenhaltge kautschukartige Pfropfcopolymerisate bekannt, welche Terpolymere aus C₂-C₈-Olefinen, Alkencarbonsäuren oder deren Estern und Maleinsäureanhydrid sind. Die genannten Kautschuke lassen sich zur Verbesserung der Schlagzähigkeit von teilkristallinen Polyamiden und thermoplastischen Polycarbonaten verwenden. Sie sind zu mindestens 90% in heißen Lösemitteln wie beispielsweise Toluol löslich, lassen sich aber nicht ausreichend emulgieren.

EP 1 127 901 beschreibt ein Verfahren zur Herstellung von emulgierbaren Wachen und wässrigen Emulsionen als Pflegemittel, bestehend aus Ethylen, einer Alkencarbonsäure und einem Ester. Die Polymere werden durch radikalische Polymerisation bei 240 - 340°C unter 1000 - 3500 bar und in Gegenwart üblicher Kettenregler hergestellt. Der Estergehalt beträgt höchstens 1,2 Gew. %. Ein höherer Estergehalt wird als nachteilhaft beschrieben (siehe Seite 4, Zeile 49).

Es bestand die Aufgabe,
- neue Ethylenterpolymerwachse enthaltende wässrige Dispersionen bereit zustellen,
- ein Verfahren zur Herstellung der neuen Ethylenterpolymerwachse enthaltenden wässrigen Dispersionen bereit zu stellen, und insbesondere
- neue Bodenpflegemittel bereit zu stellen, die gegenüber dem Stand der-Technik verbesserte Eigenschaften aufweisen.

Demgemäß wurden die eingangs definierten Ethylenterpolymerwachse enthaltenden wässrigen Dispersionen gefunden.

Die erfindungsgemäßen Dispersionen enthalten wachsartige Terpolymerisate aus Ethylen und mindestens 2 Comonomeren, wobei die Wachse üblicherweise eine Schmelzviskosität im Bereich von 400 bis 25.000 mm²/s aufweisen, bevorzugt von 2000 bis 10.000 mm²/s oder auch 2250 bis 4000 mm²/s, gemessen bei 120°C nach DIN 51562. Ihre Säurezahl beträgt 1 bis 170, bevorzugt 25 bis 150 mg KOH/g Wachs, bestimmt nach DIN 53402. Die Schmelzpunkte liegen im Bereich von 55 bis 110°C, bevorzugt im Bereich von 60 bis 102°C, bestimmt durch DSC nach DIN 51007. Die Dichte der Terpolymere beträgt üblicherweise 0,89 bis 0,99 g/cm³, bevorzugt 0,92 bis 0,96 g/cm³, bestimmt nach DIN 53479.

Auch wenn die erfindungsgemäßen Ethylenterpolymerwachse enthaltenden wässrigen Dispersionen Einheiten enthalten, die von mehr als drei verschiedenen Monomeren abgeleitet sind, beispielsweise aus Ethylen, einem Ester der allgemeinen Formel I sowie Anhydriden von zwei verschiedenen C₄-C₁₀-Dicarbonsäuren, werden sie im Rahmen der vorliegenden Erfindung als erfindungsgemäße Ethylenterpolymerwachse enthaltende wässrige Dispersionen bereichnet.

Erfindungsgemäß setzen sich die erfindungsgemäßen Ethylenterpolymerwachse aus den folgenden Einheiten zusammen:
40 bis 95 Gew.-%, bevorzugt mindestens 55 Gew.-% und besonders bevorzugt mindestens 70 Gew.-% Einheiten, abgeleitet von Ethylen,
0,1 bis 40 Gew.-%, bevorzugt 1 bis 30 Gew.-% und besonders bevorzugt 5 bis 25 Gew.-% Einheiten, abgeleitet von mindestens einem Anhydrid einer C₄-C₁₀-Dicarbonsäure mit mindestens einer ethylenischen C-C-Doppelbindung
sowie 1 bis 40 Gew.-%, bevorzugt 1 bis 30 Gew.-% und besonders bevorzugt 5 bis 25 Gew.-%Einheiten, abgeleitet von mindestens einem Ester der allgemeinen Formel I 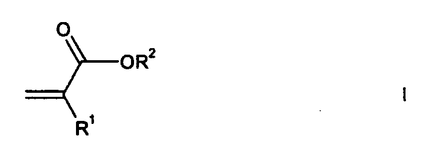
   wobei R¹ gewählt wird aus
      - Wasserstoff,
      - C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl;
      - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
      - C₆-C₁₄-Aryl wie Phenyl, 1-Naphthyl, 2-Naphthyl, 1-Anthryl, 2-Anthryl,9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.
   und R² gewählt wird aus
      - C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; bevorzugt C₁-C₄-Alkyl wie Methyl, Ethyl, n-Propyl, iso-Propyl, n-Butyl, iso-Butyl, sec.-Butyl und tert.-Butyl, insbesondere Methyl oder Ethyl;
      - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

In einer Ausführungsform der vorliegenden Erfindung wird R¹ in Formel 1 aus Wasserstoff und Methyl gewählt. In einer weiteren Ausführungsform der vorliegenden Erfindung ist R² gleich Methyl.

Die entsprechenden Einheiten werden durch Einpolymerisation der entsprechenden Monomere eingeführt. Endständige Einheiten können C-C-Doppelbindungen tragen; Einheiten, die nichtendständig sind, haben C-C-Einfachbindungen.

Die Einheiten, abgeleitet von Anhydriden von mindestens einem C₄-C₁₀-Dicarbonsäureanhydrid mit mindestens einer ethylenisch ungesättigten C-C-Doppelbindung kommen insbesondere solche Anhydride in Frage, bei denen sich im korrespondierenden Monomer mindestens eine Doppelbindung in Konjugation zu mindestens einer C-C-Doppelbindung befindet. So kommen beispielsweise Einheiten der allgemeinen Formel II a 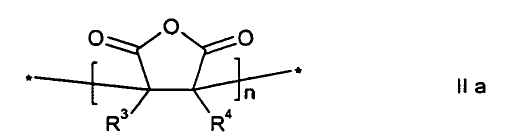 in Frage, in denen die Reste R³ und R⁴ wie folgt gewählt sind: Wasserstoff,
C₁-C₆-Alkyl, wie Methyl, Ethyl, n-Propyl, iso-Propyl, n-Butyl, iso-Butyl, sec.-Butyl, tert.-Butyl,
n-Pentyl, iso-Pentyl, sec.-Pentyl, neo-Pentyl, 1,2-Dimethylpropyl, iso-Amyl, n-Hexyl, iso-Hexyl, sec.-Hexyl,
C₂-C₆-Alkenyl, wie Vinyl, Isobutenyl oder 1-Allyl,
Phenyl,
wobei R³ und R⁴ zusammen höchstens 6 Kohlenstoffatome aufweisen.

Weiterhin kommen Anhydrideinheiten beispielsweise der allgemeinen Formel IIb 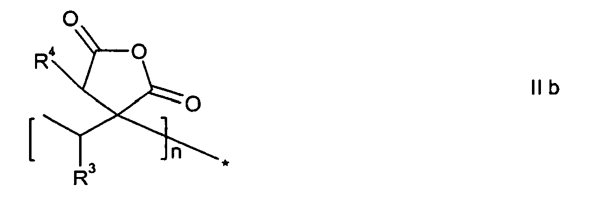 in Frage, in denen R³ und R⁴ wie oben definiert sind.

Beispielsweise handelt es sich um Anhydrideinheiten von nur einer C₄-C₁₀-Carbonsäure. Beispielsweise handelt es sich bei den Anhydrideinheiten von einer C₄-C₁₀-Carbonsäure um Maleinsäureanhydrideinheiten, d.h. in Formel II a gilt R³ = R⁴ = Wasserstoff.
In einem anderen Beispiel handelt es sich bei den Anhydrideinheiten einer C₄-C₁₀-Carbonsäure um Itaconsäureanhydrideinheiten, d.h. in Formel 11 b gilt R³ = R⁴ = Wasserstoff.

Die Einheiten von Ethylen, dem oder den Anhydriden sowie dem oder den Estern der allgemeinen Formel 1 sind in den Ethylenterpolymerwachsmolekülen üblicherweise statistisch verteilt.

Die Ethylenterpolymerisatwachse weisen ein Molekulargewicht M_{w} von bis zu 20.000 g/mol auf.

Die Ethylenterpolymerwachse lassen sich bei Temperaturen oberhalb 70°C gut kneten.

Ein weiterer Gegenstand der vorliegenden Erfindung ist ein Verfahren zur Herstellung der Ethylenterpolymerwachse.

Die Herstellung der erfindungsgemäßen Ethylenterpolymerwachse kann in gerührten Hochdruckautoklaven oder in Hochdruckrohrreaktoren erfolgen. Die Herstellung in gerührten Hochdruckautoklaven ist bevorzugt. Die für das erfindungsgemäße Verfahren angewandten gerührten Hochdruckautoklaven sind an sich bekannt, eine Beschreibung findet man in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996. Bei ihnen verhält sich überwiegend das Verhältnis Länge/Durchmesser in Intervallen von 5:1 bis 30:1, bevorzugt 10:1 bis 20:1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996.

Geeignete Druckbedingungen für die Polymerisation sind 500 bis 4000 bar, bevorzugt 1500 bis 2500 bar. Die Reaktionstemperaturen liegen im Bereich von 170 bis 300°C, bevorzugt im Bereich von 200 bis 280°C.

Das Verfahren kann man in Gegenwart eines Reglers durchführen. Als Regler verwendet man beispielsweise Wasserstoff oder einen aliphatischen Aldehyd oder ein aliphatisches Keton der allgemeinen Formel III 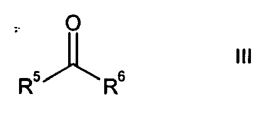 oder Mischungen derselben.

Dabei sind die Reste R⁵ und R⁶ gleich oder verschieden und ausgewählt aus
- Wasserstoff;
- C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;

In einer besonderen Ausführungsform sind die Reste R⁵ und R⁶ miteinander unter Bildung eines 4- bis 13-gliedrigen Rings kovalent verbunden. So können R⁵ und R⁶ beispielsweise gemeinsam sein: -(CH₂)₄-, -(CH₂)₅-, -(CH₂)₆, -(CH₂)₇-, -CH(CH₃)-CH₂-CH₂-CH(CH₃)- oder -CH(CH₃)-CH₂-CH₂-CH₂CH(CH₃)-.

Sehr gut geeignete Regler sind alkylaromatische Verbindungen, beispielsweise Toluol, Ethylbenzol oder ein oder mehrere Isomere des Xylols. Bevorzugt ist, die Polymerisation in Gegenwart von Toluol durchzuführen. Bevorzugt arbeitet man mit alkylaromatischen Verbindungen, beispielsweise Toluol als Regler und verzichtet auf den Einsatz von Aldehyden und Ketonen der allgemeinen Formel III.

Als Starter für die radikalische Polymerisation können die üblichen Radikalstarter wie beispielsweise organische Peroxide, Sauerstoff oder Azoverbindungen eingesetzt werden. Auch Mischungen mehrerer Radikalstarter sind geeignet.

Geeignete Peroxide, ausgewählt aus den kommerziell erhältlichen Substanzen, sind
- Didekanoylperoxid, 2,5-Dimethyl-2,5-di(2-ethylhexanoylperoxy)hexan, tert.-Amylperoxy-2-ethylhexanoat, Dibenzoylperoxid, tert.-Butylperoxy-2-ethylhexanoat, tert.-Butylperoxydiethylacetat, tert.-Butylperoxydiethylisobutyrat, 1,4-Di(tert.-butylperoxycarbonyl)-cyclohexan als Isomerengemisch, tert.-Butylperisononanoat 1,1-Di-(tert.-butylperoxy)-3,3,5-trimethylcyclohexan, 1,1-Di-(tert.-butylperoxy)-cyclohexan, Methyl-isobutylketonperoxid, tert.-Butylperoxyisopropylcarbonat, 2,2-Di-tert.-butylperox)butan oder tert.-Butylperoxacetat;
- tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Di-tert.-butylperoxid, 1,3-Diisopropylbenzolmonohydroperoxid, Cumolhydroperoxid oder tert.-Butylhydroperoxid; oder
- dimere oder trimere Ketonperoxide der allgemeinen Formel IV a bis IV c.

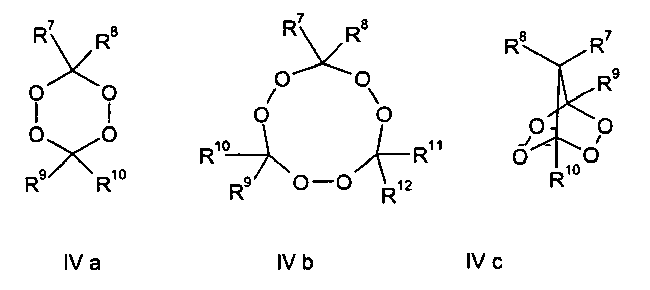

Dabei sind die Reste R⁷ bis R¹² gleich oder verschieden und ausgewählt aus
- C₁-C₈-Alkyl wie Methyl, Ethyl, n-Propyl, iso-Propyl, n-Butyl, sec.-Butyl, iso-Butyl, tert.-Butyl, n-Pentyl, sec.-Pentyl, iso-Pentyl, n-Hexyl, n-Heptyl, n-Octyl; bevorzugt lineares C₁-C₆-Alkyl wie Methyl, Ethyl, n-Propyl, n-Butyl, iso-Butyl, n-Pentyl, iso-Pentyl, n-Hexyl, iso-Hexyl, sec.-Hexyl, besonders bevorzugt lineares C₁-C₄-Alkyl wie Methyl, Ethyl, n-Propyl oder n-Butyl, ganz besonders bevorzugt ist Ethyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Peroxide der allgemeinen Formeln IV a bis IV c sowie Verfahren zu ihrer Herstellung sind aus EP-A 0 813 550 bekannt.

Als Peroxide sind Di-tert.-butylperoxid, tert.-Butylperoxypivalat, tert.-Butylperoxyisononanoat oder Dibenzoylperoxid oder Gemische derselben besonders geeignet. Als Azoverbindung sei Azobisisobutyronitril ("AIBN") beispielhaft genannt. Radikalstarter werden in für Polymerisationen üblichen Mengen dosiert. Als Lösemittel sind beispielsweise Isododekan und Toluol geeignet.

Als Monomere verwendet man Ethylen, mindestens ein Anhydrid einer C₄-C₁₀-Dicarbonsäure mit mindestens einer ethylenischen C-C-Doppelbindung und mindestens einen Ester der allgemeinen Formel 1.

Vorzugsweise ist das Anhydrid bzw. sind die Anhydride von C₄-C₁₀-Carbonsäuren bei Raumtemperatur fest. In einem weiteren Aspekt ist das Anhydrid bzw. sind die Anhydride von C₄-C₁₀-Carbonsäuren unter Normalbedingungen fest, d.h. Raumtemperatur und einem Druck von 1 bar.

In einem weiteren bevorzugten Aspekt der vorliegenden Erfindung ist der Ester der allgemeinen Formel 1 bei Raumtemperatur flüssig.

Das Mengenverhältnis der Monomere bei der Dosierung entspricht üblicherweise nicht genau dem Verhältnis der Einheiten in den erfindungsgemäßen Ethylenterpolymerwachsen, weil Anhydride von C₄-C₁₀-Dicarbonsäuren mit mindestens einer ethylenischen C-C-Doppelbindung und Ester der allgemeinen Formel 1 leichter in die erfindungsgemäßen Ethylenterpolymerwachse eingebaut werden als Ethylen.

Das Verfahren wird bevorzugt in Anwesenheit von Lösemitteln durchgeführt, wobei Mineralöle und andere Lösungsmittel, die in geringen Anteilen im erfindungsgemäßen Verfahren zugegen sind und beispielsweise zum Phlegmatisieren des oder der Radikalstarter verwendet wurden, im Sinne der vorliegenden Erfindung als Lösemittel für das erfindungsgemäße Verfahren gelten. Bevorzugt wird das erfindungsgemäße Verfahren in Anwesenheit von alkylaromatischen Verbindungen als Lösemittel durchgeführt, beispielsweise Toluol, Ethylbenzol oder Xylol.

Die Monomere werden üblicherweise gemeinsam oder getrennt dosiert. In einer Ausführungsform der vorliegenden Erfindung mischt man zunächst mindestens ein Anhydrid einer C₄-C₁₀-Dicarbonsäure mit mindestens einer ethylenischen C-C-Doppelbindung und mindestens einen Ester der allgemeinen Formel 1. Diese Ausführungsform ist insbesondere dann bevorzugt, wenn mindestens ein Anhydrid einer C₄-C₁₀-Dicarbonsäure mit mindestens einer ethylenischen C-C-Doppelbindung bei Raumtemperatur fest und mindestens ein Ester der allgemeinen Formel 1 bei Normalbedingungen flüssig ist. Die so hergestellte Mischung kann man mit alkylaromatischen Verbindungen vermischen und dann zusammen mit dem Ethylenstrom oder Teilen des Ethylenstroms direkt in den Hochdruckbereich dosieren.

Die Monomeren können in einem Kompressor auf den Polymerisationsdruck komprimiert werden. In einer anderen Ausführungsform des Verfahrens werden die Monomeren zunächst mit Hilfe einer Pumpe auf einen erhöhten Druck von beispielsweise 150 bis 400 bar, bevorzugt 200 bis 300 bar und insbesondere 250 bar gebracht und danach mit einem Kompressor auf den eigentlichen Polymerisationsdruck.

Die Ethylenterpolymerwachse lassen sich vorzüglich dispergieren; insbesondere lassen sie sich im geschmolzenen Zustand besonders gut emulgieren. Ein Gegenstand der vorliegenden Erfindung sind daher Dispersionen, insbesondere wässrige Dispersionen, enthaltend die Ethylenterpolymerwachse.

Die erfindungsgemäßen Dispersionen enthalten vorzugsweise 1 bis 40 Gew.-% ein oder mehrere Ethylenterpolymerwachse, 60 bis 98 Gew.-% Wasser, eine oder mehrere basisch wirkende Substanzen, beispielsweise Hydroxide und/oder Carbonate von Alkalimetallen, Ammoniak, organische Amine wie beispielsweise Triethylamin, Diethylamin, Ethylamin, Trimethylamin, Dimethylamin, Methylamin, Ethanolamin, Diethanolamin, Triethanolamin, Methyldiethanolamin, n-Butyldiethanolamin, N,N-Dimethylethanolamin, und gegebenenfalls weitere Bestandteile, beispielsweise Ethylenglykol, Diethylenglykol oder weitere Dispergiermittel.

Die erfindungsgemäßen Dispersionen weisen üblicherweise einen basischen pH-Wert auf, bevorzugt pH-Werte von 7,5 bis 14, besonders bevorzugt von 8 oder höher und ganz besonders bevorzugt von 9 oder höher.

Ein weiterer Gegenstand der vorliegenden Erfindung ist die Verwendung der erfindungsgemäßen Dispersionen als Bodenpflegemittel oder als Komponente in Bodenpflegemitteln.

Die Fähigkeit der erfindungsgemäßen Dispersionen zur Bildung farbloser, klarer, glänzender Filme lässt sich in Bodenpflegemitteln nutzen. Durch sie lässt sich weiterhin die Rutschfestigkeit und die Begehbarkeit von Böden verbessern.

Ein typisches erfindungsgemäßes Bodenpflegemittel besteht aus
- 10 bis 20 Gewichtsteilen der erfindungsgemäßen Dispersionen, die Elastizität, schmutzabweisendes Verhalten und Glanz des zu pflegenden Bodens bedingen,
- 0,5 bis 5, bevorzugt 2 bis 3 Gewichtsteilen Diethylenglykol,
- 0,1 bis 10, bevorzugt 1 bis 2 Gewichtsteilen Ethylenglykol,
- 0,1 bis 10, bevorzugt 1 bis 2 Gewichtsteilen eines permanenten Weichmachers, wobei als Weichmacher beispielsweise Phosphorsäuretrialkylester verwendet werden, besonders bevorzugt ist Tri-(n-butoxyethyl)phosphat,
- 0,1 bis 5 Gewichtsteile, bevorzugt 0,5 bis 1,5 Gewichtsteilen eines Netzverlaufsmittels, wobei als Netzverlaufsmittel beispielsweise fluorierte Tenside, beispielsweise FC-129 der Firma 3M verwendet werden,
- 20 bis 30 Gewichtsteile einer Dispersion aus Polystyrol/Acrylat als Trägermaterial. Ein bevorzugtes Beispiel ist Poligen® MF750.

Die Herstellung des erfindungsgemäßen Bodenpflegemittels erfolgt durch Vermischen der Komponenten beispielsweise in einem Eimer, wobei ein 5-minütiges Zusammenrühren im Allgemeinen ausreichend ist.

Ein weiterer Gegenstand der vorliegenden Erfindung ist die Verwendung der Ethylenterpolymerwachse als Komponente für Beschichtungen, beispielsweise für die Beschichtung von Papier, Folien oder Metallen für den Korrosionsschutz. Ein weiterer Gegenstand der vorliegenden Erfindung ist der Einsatz der erfindungsgemäßen Ethylenterpolymerwachse in Farben wie beispielsweise Druckfarben und Lacken. - -

Möglich ist auch der Einsatz der Ethylenterpolymerwachse als Komponente von Schmierstoffen sowie als Fällungsmittel bei der Abwasserbehandlung.

Die Erfindung wird durch Arbeitsbeispiele erläutert.

### Arbeitsbeispiele

### 1. Herstellung der Ethylenterpolymerwachse

Zunächst stellte man eine Mischung aus je 50 Gew.-% Maleinsäureanhydrid und Acrylsäuremethylester (Comonomere) her. Diese Mischung war unter Normalbedingungen flüssig. Anschließend verdünnte man sie mit Toluol, so dass sie insgesamt 50 Gew.-% an Comonomeren enthielt.
Ethylen und die mit Toluol verdünnte Mischung aus den Comonomeren wurden in einem Hochdruckautoklaven copolymerisiert, wie er in der Literatur beschrieben ist (M. Buback et al., Chem. Ing. Tech. 1994, 66, 510). Hierzu wurden weitere Mengen Toluol, Ethylen und die mit Toluol verdünnte Mischung aus den Comonomeren, der eine Initiatorlösung, bestehend aus tert.-Butylperoxypivalat (0,1 bis 0,15 mol-l⁻¹), gelöst in Toluol, zugesetzt wurde, unter dem Reaktionsdruck von 1700 bar eingespeist. In Tabelle 1 sind die Polymerisationsbedingungen und in der Tabelle 2 die analytischen Daten der erhaltenen erfindungsgemäßen Ethylenterpolymerwachse zusammengestellt.

Der Gehalt an Ethylen, Maleinsäureanhydrid und Acrylsäuremethylester in den Ethylenterpolymerwachsen wurde NMR-spektroskopisch bzw. durch Titration (Säurezahl) bestimmt. Die Säurezahl der Polymerisate wurde titrimetrisch nach DIN 53402 bestimmt. Der KOH-Verbrauch korrespondiert mit dem Maleinsäureanhydrid-Gehalt im Polymerisat.

**Tabelle 1**

| | | Zulauf | | | | | | Umsatz [jeweils Gew.-%] | | |
|---|---|---|---|---|---|---|---|---|---|---|
| Nr. | T [°C] | Ethylen [g/h] | Comonomere + TI [ml/h] | TI [g/h] | MSA [g/h] | MA [g/h] | TBPP in TI [ml/h] | Ethylen | MSA | MA |
| 1 | 220 | 12000 | 4850 | 2100 | 1184 | 1184 | 1350 | 18 | 65 | 66 |
| 2 | 218 | 12000 | 2400 | 1040 | 586 | 586 | 1300 | 17 | 59 | 65 |
| 3 | 218 | 12000 | 1600 | 692 | 692 | 391 | 391 | 19 | 61 | 75 |

| | | | | | | | | | | |
|---|---|---|---|---|---|---|---|---|---|---|
| Verwendete Abkürzungen: TI = Toluol; MSA: Maleinsäureanhydrid, MA: Acrylsäuremethylester, TBPP: Tert.-Butylperoxypivalat. Die Konzentration der Initiatorlösungen waren wie folgt: Beispiel Nr. 1 : 0,15 molar; Beispiel Nr. 2 : 0,12 molar, Beispiel Nr. 3 : 0,10 molar. Alle volumetrischen Angaben beziehen sich auf Normalbedingungen. | | | | | | | | | | |

Die analytischen Daten der erfindungsgemäßen Ethylenterpolymerwachse finden sich in Tabelle 2.

**Tabelle 2: Analytische Daten der erfindungsgemäßen Ethylenterpolymerwachse**

| Nr. | Zusammensetzung NMR/titrimetrisch | | | Säurezahl [mg KOH g⁻¹] | ρ (23°C) [g cm⁻³] | ν (120°C) [mm² s⁻¹] | Schmp. [°C] |
|---|---|---|---|---|---|---|---|
| | Ethylen | MSA | MA | | | | |
| 1.1 | 58,1 | 20,8 | 21,1 | 145 | n.b. | 3480 | 60-70 |
| 1.2 | 74,1 | 12,3 | 13,6 | 91 | n.b. | 2340 | 60-70 |
| 1.3 | 81,1 | 8,5 | 10,4 | 72 | 0,9668 | 3640 | 66,4 |

Die Schmelzviskosität wurde mit Hilfe von DSC nach DIN 51562 bestimmt, die Schmelzpunkte mit Hilfe von DSC nach DIN 51007. Die Zusammensetzungen sind jeweils in Gew.-% angegeben.
n.b.: nicht bestimmt

### 2. Herstellung einer erfindungsgemäßen Dispersion

In einem 2-Liter-Rührtopf mit Ankerrührer und Rückflusskühler wurden 933 g Wasser vorgelegt und auf 90°C vorgeheizt. Innerhalb von 30 Minuten wurden 400 g des erfindungsgemäßen Ethylenterpolymerwachses aus Beispiel 1.1 portionsweise zugefügt und die Mischung bis zum Rückfluss erhitzt. Anschließend wurden 22,72 g 50 Gew.-% wässrige KOH unter starkem Rühren zugegeben. Schließlich wurden noch 267 g Wasser zugefügt und die entstandene Dispersion auf Raumtemperatur abgekühlt. Der pH-Wert der so erhaltenen Dispersion betrug 11; der Feststoffgehalt 24,3 Gew.-% und die mittlere Teilchengröße 180-190 nm, bestimmt nach ISO 13321 mit einem Gerät Autosizer IIC (Fa. Malvern) bei folgenden Parametern:

| | |
|---|---|
| Messtemperatur | :23,0°C |
| Messzeit | : 200 Sekunden (10 Zyklen á 20 s) |
| Streuwinkel | : 90° |
| Wellenlänge Laser | : 633 nm (HeNe) |

## Patentansprüche

1. Wässrige Dispersionen enthaltend Ethylenterpolymerwachse, enthaltend
40 bis 95 Gew.-% Einheiten, abgeleitet von Ethylen,
0,1 bis 40 Gew.-% Einheiten, abgeleitet von mindestens einem Anhydrid einer C₄-C₁₀-Dicarbonsäure mit mindestens einer ethylenischen C-C-Doppelbindung
sowie 1 bis 40 Gew.-% Einheiten, abgeleitet von mindestens einem Ester der allgemeinen Formel 1 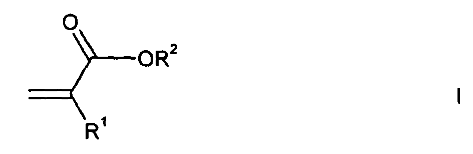 wobei R¹ gewählt wird aus Wasserstoff, C₁-C₁₀-Alkyl, C₃-C₁₂-Cycloalkyl oder C₆-C₁₄-Aryl und R² gewählt wird aus C₁-C₁₀-Alkyl oder C₃-C₁₂-Cycloalkyl
mit einem Molekulargewicht M_{w} von bis zu 20.000 g/mol.

2. Wässrige Dispersionen nach Anspruch 1, **dadurch gekennzeichnet, dass** R¹ in Formel 1 aus Wasserstoff und Methyl gewählt wird.

3. Wässrige Dispersionen nach einem der Ansprüche 1 oder 2, **dadurch gekennzeichnet, dass** R² in Formel I Methyl ist.

4. Wässrige Dispersionen nach einem der Ansprüche 1 bis 3, **dadurch gekennzeichnet, dass** als Anhydrid der Dicarbonsäure Maleinsäureanhydrid gewählt wird.

5. Verfahren zur Herstellung von wässrigen Dispersionen enthaltend Ethylenterpolymerwachse nach einem der Ansprüche 1 bis 3, **dadurch gekennzeichnet, dass** man Ethylen, mindestens einen Ester der allgemeinen Formel 1 und mindestens ein Anhydrid einer C₄-C₁₀-Dicarbonsäure mit mindestens einer ethylenischen C-C-Doppelbindung miteinander bei Drücken von 500 bis 4000 bar und Temperaturen von 170 bis 300°C polymerisiert, und danach im geschmolzenen Zustand in Wasser emulgiert.

6. Verfahren nach Anspruch 5, **dadurch gekennzeichnet, dass** man in Gegenwart von alkylaromatischen Verbindungen polymerisiert.

7. Verfahren nach einem der Ansprüche 5 oder 6, **dadurch gekennzeichnet, dass** das Anhydrid der Dicarbonsäure oder die Anhydride der Dicarbonsäuren bei Raumtemperatur fest ist.

8. Verfahren nach Anspruch 6 oder 7, **dadurch gekennzeichnet, dass** man mindestens einen Ester der allgemeinen Formel 1 vor der Polymerisation mit mindestens einem Anhydrid einer C₄-C₁₀-Dicarbonsäure mischt und gemeinsam in den Polymerisationsreaktor dosiert.

9. Verwendung von wässrigen Dispersionen nach einem der Ansprüche 1 bis 4 als Komponente in Bodenpflegemitteln.

10. Bodenpflegemittel, enthaltend wässrige Dispersionen nach einem der Ansprüche 1 bis 4.

## Claims

1. An aqueous dispersion comprising ethylene terpolymer waxes comprising
from 40 to 95% by weight of units derived from ethylene,
from 0.1 to 40% by weight of units derived from at least one anhydride of a C₄-C₁₀-dicarboxylic acid having at least one ethylenic C-C double bond,
and from 0.1 to 40% by weight of units derived from at least one ester of the formula I 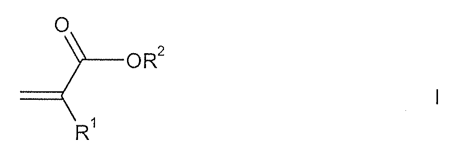 where R¹ is selected from hydrogen, C₁-C₁₀-alkyl, C₃-C₁₂-cycloalkyl or C₆-C₁₄-aryl and R² is selected from C₁-C₁₀-alkyl or C₃-C₁₂-cycloalkyl,
having a molecular weight M_{w} of up to 20 000 g/mol.

2. The aqueous dispersion according to claim 1, wherein R¹ in formula I is selected from hydrogen and methyl.

3. The aqueous dispersion according to either of claims 1 and 2, wherein R² in formula I is methyl.

4. The aqueous dispersion according to any of claims 1 to 3, wherein maleic anhydride is selected as the anhydride of the dicarboxylic acid.

5. A process for the preparation of aqueous dispersions comprising ethylene terpolymer waxes, according to any of claims 1 to 3, wherein ethylene, at least one ester of the formula I and at least one anhydride of a C₄-C₁₀-dicarboxylic acid having at least one ethylenic C-C double bond are polymerized with one another at from 500 to 4 000 bar and from 170 to 300°C, and then, in the molten state, emulsified in water.

6. The process according to claim 5, wherein polymerization is effected in the presence of alkylaromatic compounds.

7. The process according to either of claims 5 and 6, wherein the anhydride of the dicarboxylic acid or the anhydrides of the dicarboxylic acids is or are solid at room temperature.

8. The process according to claim 6 or 7, wherein at least one ester of the formula I is mixed with at least one anhydride of a C₄-C₁₀-dicarboxylic acid before the polymerization and metered together into the polymerization reactor.

9. The use of aqueous dispersions according to any of claims 1 to 4 as component in floor care compositions.

10. A floor care composition comprising aqueous dispersions according to any of claims 1 to 4.

## Revendications

1. Dispersions aqueuses contenant des cires de terpolymère d'éthylène contenant :
40 à 95 % en poids d'unités dérivées d'éthylène;
0,1 à 40 % en poids d'unités dérivées d'au moins un anhydride d'un acide C₄-C₁₀-dicarboxylique avec au moins une double liaison C-C éthylénique
ainsi que 1 à 40 % en poids d'unités dérivées d'au moins un ester de formule générale I : 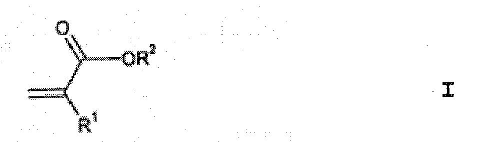 dans laquelle R¹ est choisi parmi l'hydrogène, un radical C₁-C₁₀-alkyle, C₃-C₁₂-cycloalkyle ou C₆-C₁₄-aryle
et R² est choisi à partir d'un radical C₁-C₁₀-alkyle ou C₃-C₁₂-cycloalkyle,
avec un poids moléculaire M_{w} de 20 000 g/mole max.

2. Dispersions aqueuses selon la revendication 1, **caractérisées en ce que** R¹ dans la formule I est choisi à partir de l'hydrogène et du méthyle.

3. Dispersions aqueuses selon l'une des revendications 1 ou 2, **caractérisées en ce que** R² dans la formule I est un radical méthyle.

4. Dispersions aqueuses selon l'une des revendications 1 à 3, **caractérisées en ce que** l'anhydride d'acide maléique est utilisé comme anhydride d'acide dicarboxylique.

5. Procédé de préparation de dispersions aqueuses contenant des cires de terpolymère d'éthylène selon l'une des revendications 1 à 3, **caractérisé en ce que** l'on polymérise l'éthylène, au moins un ester de formule générale I et au moins un anhydride d'un acide C₄-C₁₀-dicarboxylique avec au moins une double liaison C-C éthylénique entre eux à des pressions de 500 à 4000 bars et des températures de 170 à 300° C et on les émulsifie ensuite à l'état fondu dans l'eau.

6. Procédé selon la revendication 5, **caractérisé en ce que** l'on procède à une polymérisation en présence de composés alkylaromatiques.

7. Procédé selon l'une des revendications 5 ou 6, **caractérisé en ce que** l'anhydride de l'acide dicarboxylique ou les anhydrides des acides dicarboxyliques sont solides à température ambiante.

8. Procédé selon l'une des revendications 6 ou 7, **caractérisé en ce que** l'on mélange au moins un ester de formule générale I avant la polymérisation avec au moins un anhydride d'un acide C₄-C₁₀-dicarboxylique et on les ajoute en même temps dans le réacteur de polymérisation.

9. Utilisation de dispersions aqueuses selon l'une des revendications 1 à 4 comme composants dans les produits pour l'entretien des sols.

10. Produit pour l'entretien des sols contenant des dispersions aqueuses selon l'une des revendications 1 à 4.
